# EUROPÄISCHE PATENTSCHRIFT

(11) **EP 3 056 414 B1**
(45) Veröffentlichungstag und Bekanntmachung des Hinweises auf die Patenterteilung: **08.07.2020**
(21) Anmeldenummer: 16151436.9
(22) Anmeldetag: 15.01.2016
(51) Int. Cl.: B62D 33/06, B60J 7/00, B60J 1/06, B60J 1/04

(54) **REGENDACH FÜR BAGGER**
RAIN COVER FOR EXCAVATOR
TOIT DE PROTECTION POUR MACHINE D'EXCAVATION

(30) Priorität: 12.02.2015 DE 102015001869
(43) Veröffentlichungstag der Anmeldung: 17.08.2016
(73) Patentinhaber: Wacker Neuson Linz GmbH, 4063 Hörsching (AT)
(72) Erfinder: Guszmann, Bernhard, 1160 Wien (AT)
(74) Vertreter: Müller Hoffmann & Partner

(56) Entgegenhaltungen:
- WO-A1-2009/110273
- DE-A1- 3 816 779
- DE-A1- 4 404 415
- DE-U1-202010 000 040
- US-A- 3 905 626

## Beschreibung

Die Erfindung betrifft eine Fahrerkabine für ein Fahrzeug, vor allem für einen Bagger. Insbesondere bezieht sich die Erfindung auf das Frontfenster eines derartigen Fahrzeugs, das in bestimmter Weise geöffnet und geschlossen werden kann.

Bei Fahrzeugen, insbesondere bei Baggern, findet häufig ein zweigeteiltes Frontfenster Verwendung, das aus einem Oberfenster und einem Unterfenster besteht, die vom Fahrer entsprechend in unterschiedlichen Bedingungen angeordnet und damit geöffnet und geschlossen werden können.

Aus der DE 44 04 415 A1 ist es bekannt, dass das Oberfenster und das Unterfenster in einer Normalstellung die Frontöffnung des Fahrerhauses verschließen. Das Oberfenster kann aus der Normalstellung in eine unter dem Dach des Fahrerhauses vorgesehene Staustellung bewegt werden. Das Unterfenster ist an dem Oberfenster angekoppelt und kann auf diese Weise zusammen mit dem Oberfenster ebenfalls in die Staustellung unter dem Dach bewegt werden.

Ein ähnliche Anordnung ist aus der DE 20 2010 000 040 U1 bekannt, die eine Fahrerkabine mit einem Oberfenster und einem Unterfenster zeigt, wobei das Oberfenster und das Unterfenster in eine Staustellung unterhalb des Kabinendachs verschiebbar sind. Aus der US 3905626 ist bekannt dass ein langes aufklappbaren Frontfenster in der Staustellung ein wenig übersteht.

Vor allem kleinere Bagger, insbesondere Kompaktbagger, weisen eine sogenannte Schwenkkonsole auf, bei der der gesamte Baggerarm relativ zu der Fahrerkabine verschwenkt werden kann. Für einen kompakten Aufbau derartiger Bagger kommt es darauf an, dass der Arm einen möglichst geringen Frontschwenkradius aufweist, da er aufgrund der zwischen dem Arm und der Fahrerkabine vorgesehenen Schwenkkonsole weiter vorne angebaut ist als bei konventionellen Baggern. Dieser Frontschwenkradius beschreibt die geringstmögliche Störkontur, die der Baggerarm beim Drehen einnehmen kann. Der Arm muss demnach so nahe wie möglich bei der Drehachse (Drehachse für die Drehung des Oberwagens mit Fahrerkabine und Arm) angelenkt sein. Um dies zu erreichen, ist der Arm meist sehr nah an der Fahrerkabine angesetzt.

Es hat sich in der Praxis durchgesetzt, dass bei Baggerarbeiten häufig mit einem geöffneten Frontfenster gearbeitet wird. Dies ermöglicht eine bessere Sicht, eine gute Durchlüftung der Fahrerkabine und eine vereinfachte Kommunikation mit Arbeitskollegen, die in der Baugrube arbeiten. Bei schlechten Witterungsbedingungen, insbesondere bei Regen, besteht jedoch der Nachteil, dass es in die Kabine regnen kann. Um dies zu verhindern, ist bei konventionellen größeren Baggern häufig ein am Kabinendach angeschraubtes Regendach vorgesehen. Bei kleinen Baggern, insbesondere Kompaktbaggern mit geringem Frontschwenkradius ist das Anschrauben eines Regendachs jedoch aus Platzgründen nicht sinnvoll, weil der dann von dem Regendach eingenommene Bauraum nicht mehr zum Zurückfahren des Baggerarms genutzt werden kann, was zu einem vergrößertem - und damit unerwünschtem - Frontschwenkradius führt. Demensprechend ist bei kompakt gebauten Baggern, die einen möglichst kleinen Frontschwenkradius erreichen sollen, kein Platz für ein Regendach an der Kabine vorhanden. Bei Arbeiten mit geöffneter Frontscheibe regnet es dann in der Regel in die Kabine.

Der Erfindung liegt die Aufgabe zugrunde, eine Fahrerkabine für ein Fahrzeug, insbesondere für einen Bagger anzugeben, bei dem auch bei einer sehr kompakten Bauweise ein Regendach bereitgestellt werden kann.

Die Erfindung wird durch eine Fahrerkabine mit den Merkmalen von Anspruch 1 gelöst. Vorteilhafte Ausgestaltungen der Erfindung sind in den abhängigen Ansprüchen angegeben.

Eine Fahrerkabine für ein Fahrzeug weist einen Kabinenrahmen mit einer nach vorne gerichteten Frontöffnung und einem Dachbereich sowie ein zweigeteiltes Frontfenster mit einem Oberfenster und einem Unterfenster auf, wobei das Oberfenster und das Unterfenster in verschiedene Stellungen bewegbar sind, nämlich in eine Normalstellung, in der das Oberfenster und das Unterfenster die Frontöffnung abdecken, in eine Staustellung, in der das Oberfenster und/oder das Unterfenster im Dachbereich angeordnet sind und die Frontöffnung wenigstens teilweise, insbesondere vollständig geöffnet ist, oder in eine Regendachstellung, in der das Oberfenster und/oder das Unterfenster relativ zu der Staustellung im Wesentlichen horizontal um einen bestimmten Weg nach vorne verschoben ist.

Der Kabinenrahmen stellt somit in üblicher Weise die Grundstruktur für die Fahrerkabine bereit, wobei nach vorne, in Richtung des Baggerarms, eine große Frontöffnung gebildet wird, die durch das zweigeteilte Frontfenster in Normalstellung verschlossen ist. Das Frontfenster beziehungsweise also Oberfenster und Unterfenster bilden eine Frontscheibe, die je nach Ausgestaltung eine im Wesentlichen bündige, gegebenenfalls gekrümmte Fläche bilden kann.

Im Dachbereich des Kabinenrahmens können weitere Öffnungen, zum Beispiel ein Dachfenster vorgesehen sein. In der Staustellung sind das Oberfenster oder das Unterfenster oder beide Fenster im Dachbereich angeordnet. Oberfenster und Unterfenster erstrecken sich dabei im Wesentlichen parallel zu dem Dachbereich der Fahrerkabine und sind demnach im Wesentlichen horizontal ausgerichtet. In der Normalstellung hingegen stehen die Fenster im Wesentlichen vertikal.

Je nach Ausführungsform ist es demnach möglich, dass z.B. beide Fenster in der Staustellung stehen oder auch nur ein Fenster, während das andere Fenster in einer anderen Stellung (z.B. der Normalstellung) steht.

In der Regendachstellung ist entweder das Oberfenster oder das Unterfenster oder auch beide Fenster um den bestimmten Weg nach vorne verschoben, so dass das betreffende Fenster über die Frontöffnung hinaus nach vorne aus dem Kabinenrahmen übersteht und einen Überstand bildet. Dieser Überstand wirkt wie ein Regendach beziehungsweise Regenschild und hält Regen davon ab, in das Innere der Fahrerkabine zu gelangen. Wenn das Regendach nicht benötigt wird, kann das betreffende Fenster wieder zurück in die Staustellung verschoben werden. In beiden Fällen bleibt die Frontöffnung komplett geöffnet, so dass die entsprechenden Vorteile für den Fahrer, wie zum Beispiel gute Belüftung der Kabine, gute Sicht und einfache Kommunikation mit den Arbeitskollegen gewährleistet sind.

Der Überstand, also die Länge, mit der das Oberfenster und/oder das Unterfenster aus dem Kabinenrahmen beziehungsweise der Frontöffnung heraussteht, kann eine Längserstreckung von 10% bis 70%, insbesondere von 20% bis 40% der Länge des betreffenden Oberfensters oder Unterfensters aufweisen, wobei die Länge des Oberfensters oder des Unterfensters der vertikalen Erstreckung des jeweiligen Fensters entspricht, wenn das Fenster in der Normalstellung steht. Als Länge wird dementsprechend die Erstreckung des betreffenden Fensters in der Vertikalebene verstanden, welche sich in Längsrichtung der Fahrerkabine beziehungsweise des Baggers erstreckt.

Der den Überstand bildende Bereich des betreffenden Fensters, welches das Regendach bildet, also des Oberfensters oder des Unterfensters, kann eine geringere Breite aufweisen als der restliche Teil des betreffenden Fensters. Damit ist es möglich, dass dieser Bereich zwischen den Säulen des Kabinenrahmens und insbesondere durch die Frontöffnung nach vorne bewegt werden kann, ohne mit den Komponenten des Kabinenrahmens zu kollidieren. Der verbleibende Teil des betreffenden Fensters kann eine größere Breite aufweisen, insbesondere auch eine größere Breite als der Ausschnitt der Frontöffnung.

Bei einer Ausführungsform kann zur Verwirklichung der Regendachstellung das Oberfenster in der Staustellung stehen, also im Dachbereich angeordnet sein, während das Unterfenster relativ zu dem Oberfenster im Wesentlichen horizontal um den bestimmten Weg nach vorne verschoben ist, um den Überstand zu bilden. Der bestimmte Weg entspricht dann mindestens dem oben genannten Überstand. In der Regel wird er aber etwas größer sein, da das Unterfenster auch zunächst die Frontöffnung und die Komponenten des Kabinenrahmens (Säulen) passieren muss, bevor ein wirksamer, das Eindringen von Regen verhindernder Überstand erreicht wird.

Es kann eine Oberfenster-Führungseinrichtung vorgesehen sein, zum Halten des Oberfensters in seiner jeweiligen Stellung und zum Bewegen des Oberfensters zwischen den jeweiligen Stellungen. Dabei ist darauf zu achten, dass das Oberfenster in jeder Stellung zuverlässig und sicher gehalten wird und dass ein Wechsel zwischen den Stellungen für den Bediener komfortabel durchgeführt werden kann.

Die Oberfenster-Führungseinrichtung kann geeignete Führungselemente aufweisen, wie z.B. Lenker, Kurvenführungen, Längsführungen, Hebel, Federelemente (z.B. Gasdruckfedern), Achsen etc., um die gewünschten Bewegungswege des Oberfensters zu realisieren und das Oberfenster sicher in der jeweiligen Stellung zu halten.

Die Oberfenster-Führungseinrichtung kann wirkungsmäßig zwischen dem Oberfenster und dem Kabinenrahmen vorgesehen sein, derart, dass das Oberfenster an dem Kabinenrahmen gehalten ist. Auf diese Weise ist eine stabile Verbindung zwischen Oberfenster und Kabinenrahmen möglich. Eine das Oberfenster an dem Kabinenrahmen haltende Führungseinrichtung ist zum Beispiel auch aus der DE 44 04 415 A1 bekannt.

Es kann eine Unterfenster-Führungseinrichtung vorgesehen sein, zum Halten des Unterfensters in seiner jeweiligen Stellung und zum Bewegen des Unterfensters zwischen den jeweiligen Stellungen. Analog zu der Oberfenster-Führungseinrichtung muss auch die Unterfenster-Führungseinrichtung das betreffende Fenster zuverlässig und sicher halten und eine Bewegung zwischen den Stellungen vereinfachen.

Dabei kann die Unterfenster-Führungseinrichtung wirkungsmäßig zwischen dem Unterfenster und dem Oberfenster vorgesehen sein, derart, dass das Unterfenster an dem Oberfenster gehalten ist. Das bedeutet, dass bei einem Bewegen des Oberfensters das Unterfenster automatisch mitbewegt wird. Der Fahrer kann auf diese Weise sehr komfortabel die Fenster hin und her bewegen. Darüber hinaus ist es aber auch möglich, das Unterfenster relativ zu dem Oberfenster zu bewegen, was insbesondere zum Erreichen der Regendachstellung mithilfe des Unterfensters sinnvoll ist.

Die Unterfenster-Führungseinrichtung kann von dem Oberfenster lösbar sein, derart, dass das Unterfenster in der Normalstellung stehenbleibt und das Oberfenster aus der Normalstellung in eine andere Stellung bewegbar ist. In diesem Fall bleibt das Unterfenster im unteren Bereich der Frontöffnung stehen und verschließt diese, wobei die Unterfenster-Führungseinrichtung das Unterfenster direkt mit dem Kabinenrahmen koppelt. Das Oberfenster alleine kann aus der Normalstellung in die Staustellung und zum Beispiel auch in die Regendachstellung bewegt werden.

Bei einer Variante ist es möglich, eine Lüftungsstellung zu erreichen, in der das Oberfenster in Normalstellung steht und das Unterfenster aus seiner Normalstellung heraus relativ zu der Normalstellung gekippt ist. Hier bildet sich zwischen Oberfenster und Unterfenster ein Spalt, über den ein gewisser Luftaustausch zwischen dem Kabineninneren und der Umgebung möglich ist. Diese Stellung ist insbesondere an kalten Tagen zweckmäßig.

Weiterhin ist es möglich, eine Teilöffnungsstellung vorzusehen, in der das Oberfenster in Normalstellung steht und das Unterfenster in eine Stellung verschoben ist, in der es hinter dem Oberfenster steht, derart, dass der von dem Unterfenster in Normalstellung verschlossene Bereich der Frontöffnung geöffnet ist. Das Oberfenster bildet somit einen guten Schutz, während der untere Bereich der Frontöffnung offen steht, um einen guten Luftaustausch mit der Umgebung und eine gute Sicht auf einen nahe beim Bagger befindlichen Arbeitsort zu ermöglichen.

Es kann eine erste Arretierungseinrichtung vorgesehen sein, zum Halten des Unterfensters relativ zu dem Oberfenster in einer ersten Relativstellung, in der das Unterfenster im Wesentlichen vollständig von dem Oberfenster abgedeckt ist, bei einer Blickrichtung senkrecht auf das Oberfenster. Diese Arretierungseinrichtung kann zusätzlich zu der Unterfenster-Führungseinrichtung vorgesehen sein, um das Unterfenster in der definierten ersten Relativstellung zu halten. Das Unterfenster, das in der Normalstellung noch neben beziehungsweise unterhalb von dem Oberfenster steht, ist dann vollständig hinter das Oberfenster gefahren und wird durch dieses abgedeckt, wenn die Blickrichtung senkrecht von außen auf das Oberfenster erfolgt.

Es kann auch eine zweite Arretierungseinrichtung vorgesehen sein, zum Halten des Unterfensters relativ zu dem Oberfenster in einer zweiten Relativstellung, in der das Unterfenster teilweise durch das Oberfenster abgedeckt ist und dabei relativ zu dem Oberfenster um einen Betrag vorsteht, der im Wesentlichen dem Überstand entspricht, bei einer Blickrichtung senkrecht - insbesondere von außen - auf das Oberfenster. Mithilfe der zweiten Arretierungseinrichtung kann somit die zweite Relativstellung gesichert sein, in der das Unterfenster nicht vollständig durch das Oberfenster abgedeckt ist, sondern um den bestimmten Betrag relativ zu dem Oberfenster vorsteht.

Diese und weitere Vorteile und Merkmale der Erfindung werden nachfolgend anhand eines Beispiels unter Zuhilfenahme der begleitenden Figuren näher erläutert. Es zeigen:
- **Figur 1**: eine Fahrerkabine in Perspektivansicht, mit Oberfenster und Unterfenster in Normalstellung;
- **Figur 2**: eine Teildarstellung zu Figur 1 mit Oberfenster und Unterfenster;
- **Figur 3**: die Fahrerkabine mit dem Frontfenster in Teilöffnungsstellung;
- **Figur 4**: eine Rückansicht zu Oberfenster und Unterfenster in Teilöffnungsstellung;
- **Figur 5**: die Fahrerkabine mit Oberfenster und Unterfenster in Staustellung;
- **Figur 6**: eine Teilschnittdarstellung zu Figur 5;
- **Figur 7**: die Fahrerkabine mit dem Unterfenster in Regendachstellung;
- **Figur 8**: eine Teilansicht mit Oberfenster und Unterfenster bei der Regendachstellung von Figur 7; und
- **Figur 9**: eine Rückansicht zu Figur 8.

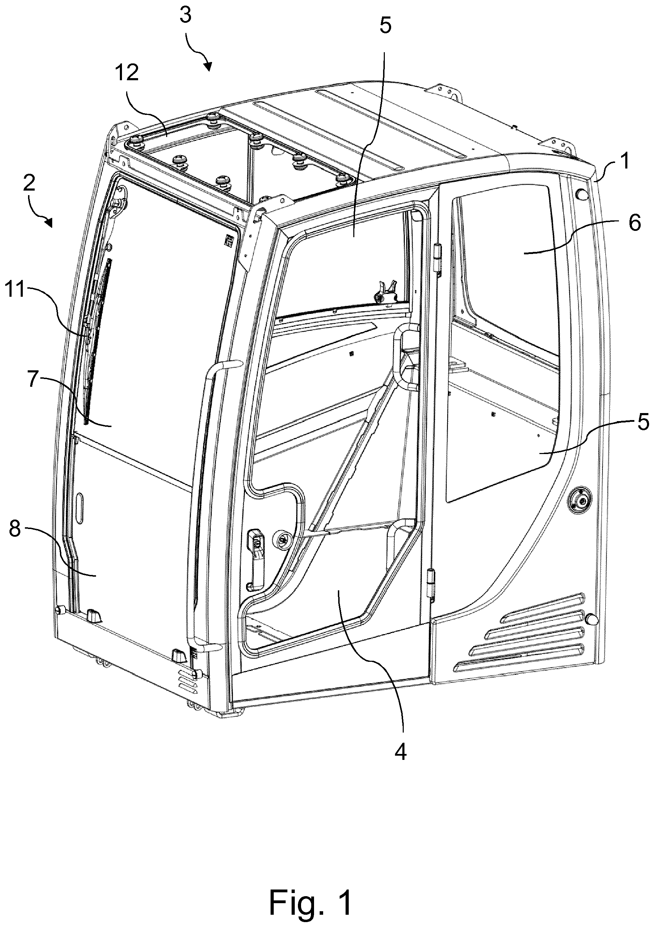

Die Figuren 1 bis 9 zeigen eine Ausführungsform einer Fahrerkabine für ein Fahrzeug, insbesondere für einen Bagger, in verschiedenen Ansichten.

Die Fahrerkabine weist einen Kabinenrahmen 1 mit einer nach vorne, also zu einem nicht dargestellten Baggerarm gerichteten Frontöffnung 2 und einen Dachbereich 3 auf. Weiterhin sind an dem Kabinenrahmen 1 ein Türausschnitt 4, Seitenfenster 5 und ein Rückfenster 6 in bekannter Weise vorgesehen.

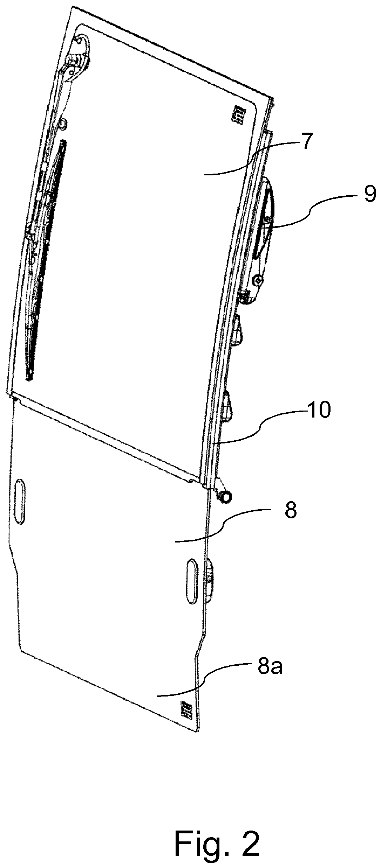

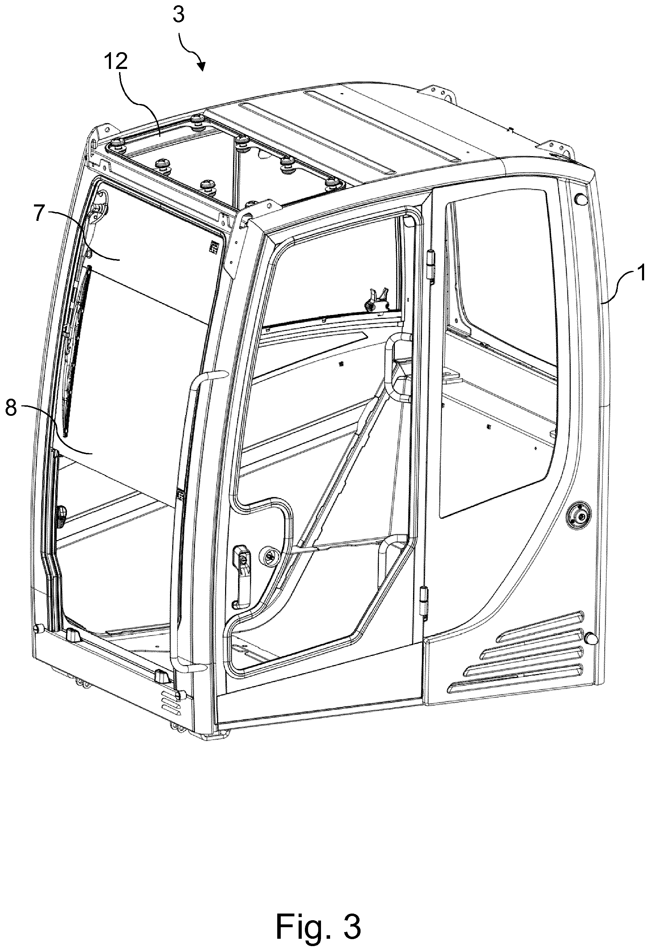

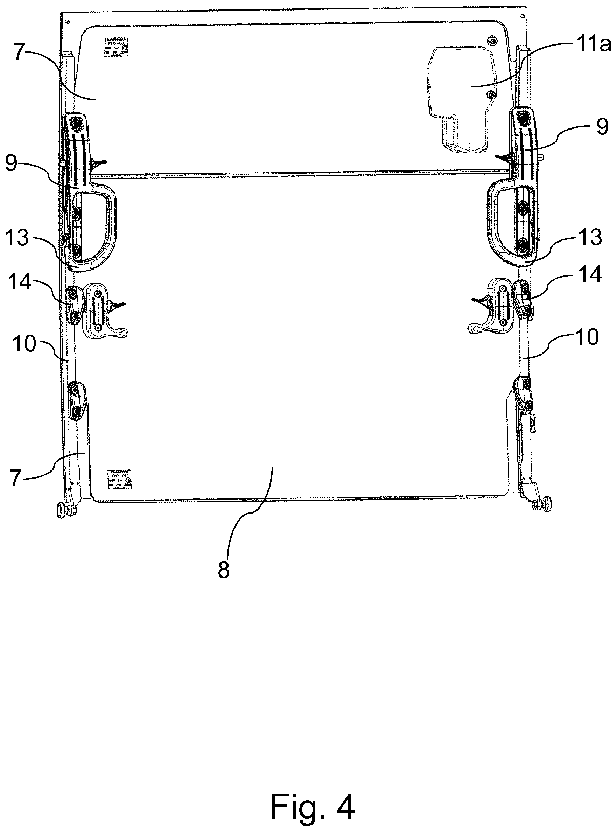

In der Frontöffnung 2 ist ein zweitgeteiltes Frontfenster mit einem Oberfenster 7 und einem Unterfenster 8 eingesetzt. Das Oberfenster 7 ist mithilfe einer Oberfenster-Führungseinrichtung 9 an dem Kabinenrahmen 1 gehalten (Figur 2). Weiterhin ist eine Unterfenster-Führungseinrichtung 10 vorgesehen, die das Unterfenster 8 mit dem Oberfenster 7 koppelt und relativ zu dem Oberfenster 7 beweglich führt (Fig. 2 und 4). Auf diese Weise ist zum Beispiel das Unterfenster 8 aus der in Figur 1 gezeigten Normalstellung in die in Figur 3 gezeigt Teillüftungsstellung verschiebbar, bei der sich das Unterfenster 8 hinter dem Oberfenster 7 befindet.

Die Oberfenster-Führungseinrichtung 9 und die Unterfenster-Führungseinrichtung 10 können geeignete Mittel aufweisen, um die gewünschten Wirkungen zu erreichen. Dazu gehören insbesondere Kopplungselemente, Lenker, Linear- und Kurvenführungen, Achsen, Federelemente (auch Gasdruckfedern) etc.

An dem Oberfenster 7 kann zum Beispiel auch eine Scheibenwischereinrichtung 11 angebracht sein.

Im Dachbereich 3 des Kabinenrahmens 1 ist ein Dachfenster 12 eingesetzt, um dem Fahrer einen Blick auch nach oben zu ermöglichen.

Figur 4 zeigt die Teillüftungsstellung von Figur 3 mit Oberfenster 7 und Unterfenster 8 in Rückansicht.

Darüber hinaus sind Teile der Oberfenster-Führungseinrichtung 9 zu erkennen, nämlich Handgriffe 13, an denen der Fahrer das Oberfenster 7 zusammen mit dem angekoppelten Unterfenster 8 bewegen kann.

Als Teil der Unterfenster-Führungseinrichtung 10 sind auf dem Oberfenster 7 Schienen befestigt, in denen das Unterfenster 8 gehalten und verschiebbar beweglich ist. Zu erkennen ist auch ein Scheibenwischermotor 11a, der auf der Rückseite des Oberfensters 7 aufgesetzt ist.

Darüber hinaus ist eine erste Arretierungseinrichtung 14 vorgesehen, mit der die Relativstellung zwischen Oberfenster 7 und Unterfenster 8 in der in den Figuren 4 bzw. 3 gezeigten Teillüftungsstellung gesichert wird. Das Unterfenster 8 nimmt somit relativ zu dem Oberfenster 7 eine erste Relativstellung ein, in der das Unterfenster 8 - bei einer Ansicht von außen - im Wesentlichen vollständig von dem Oberfenster 7 abgedeckt ist, wie die Figuren 3 und 4 (in Rückansicht) zeigen. Bei Figur 3 befindet sich das Unterfenster 8 somit vollständig hinter dem Oberfenster 7.

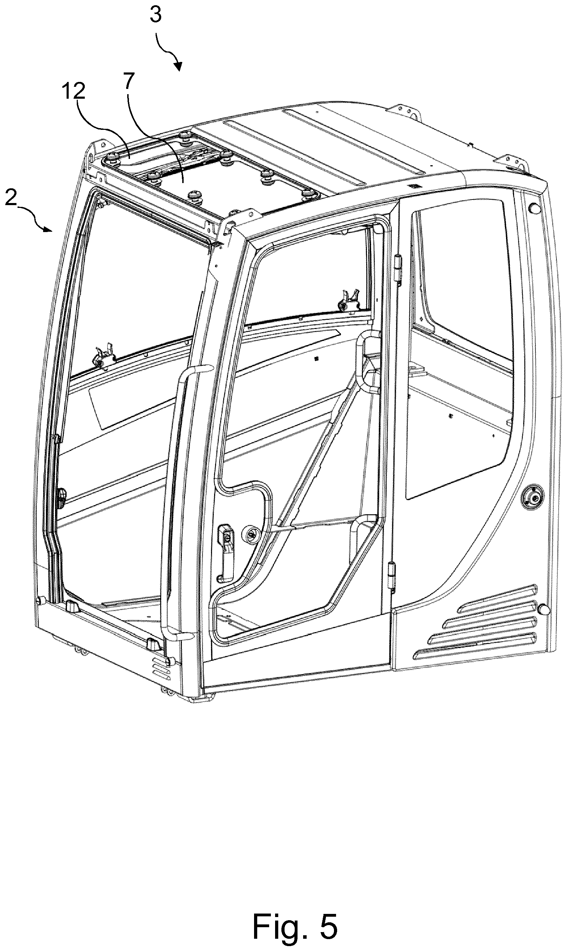

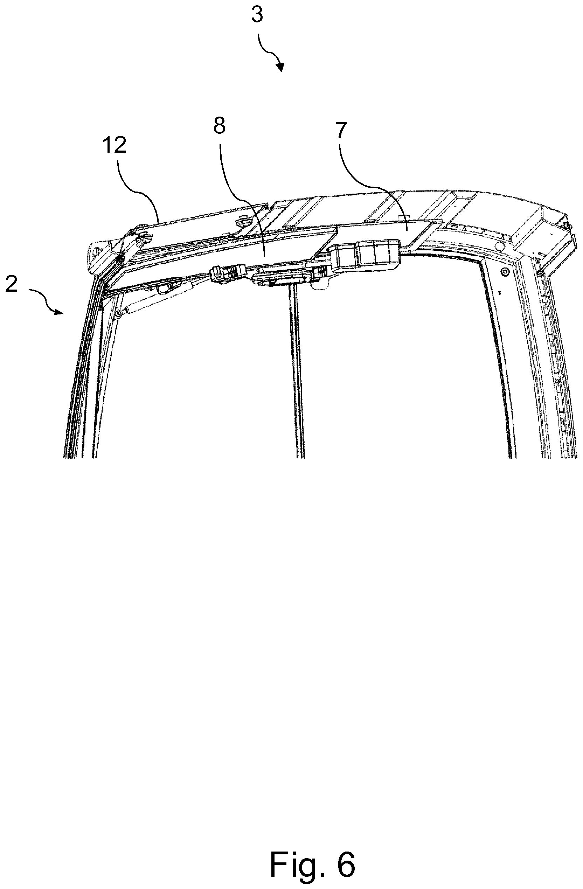

Figur 5 zeigt Oberfenster 7 und Unterfenster 8 in Staustellung, in der das Oberfenster 7 und das Unterfenster 8 in den Dachbereich 3, unterhalb des Dachfensters 12 verschoben sind. Das Oberfenster 7 und das Unterfenster 8 erstrecken sich somit im Wesentlichen horizontal parallel zu dem Dachbereich 3 beziehungsweise dem Dachfenster 12, wie auch Figur 6 im Schnitt zeigt.

Die Angabe "im Wesentlichen horizontal" bedeutet nicht, dass die Fenster (Oberfenster 7, Unterfenster 8) exakt horizontal ausgerichtet sein müssen. Es soll lediglich verdeutlicht werden, dass sie sich entlang dem Dachbereich 3 erstrecken und dabei selbstverständlich ohne weiteres auch gegenüber der (exakten) Horizontalen eine gewisse Neigung aufweisen können, wie bereits auch Figur 6 zeigt.

Bei der Staustellung von Figur 6 ist - wie in Figur 5 erkennbar - die Frontöffnung 2 vollständig geöffnet, so dass der Fahrer einen direkten und guten Zugang zum Arbeitsort hat. Insbesondere ist für ihn eine gute Sicht und optimale Durchlüftung der Fahrerkabine gewährleistet.

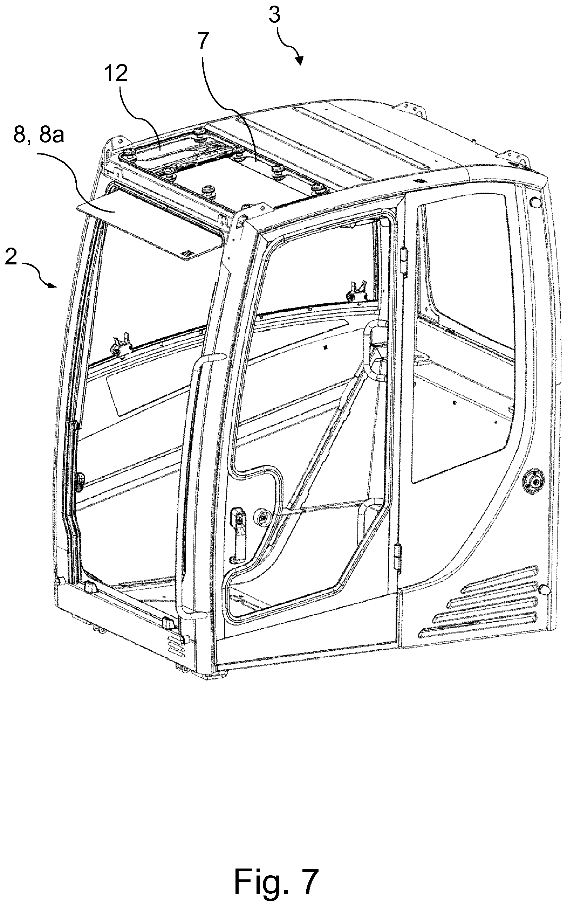

Figur 7 zeigt die Regendachstellung, bei der das Unterfenster 8 relativ zu der Staustellung von Figur 5 und damit relativ zu dem Oberfenster 7 im Wesentlichen horizontal um einen bestimmten Weg nach vorne verschoben ist. Das Unterfenster 8 beziehungsweise der in Figur 7 erkennbare, über die Frontöffnung 2 vorstehende Bereich des Unterfensters 8 bildet einen Überstand 8a, der von oben herabfallenden Regen am Eindringen in die Fahrerkabine hindert. Dieser Bereich dient also als ein Regendach, kann aber bei Bedarf jederzeit wieder zurück in die Staustellung (Figur 5) geschoben werden, wenn z.B. Platzbedarf für den Baggerarm besteht.

Bei der Bewegung zwischen Staustellung und Regendachstellung wird das Unterfenster 8 mithilfe der Unterfenster-Führungseinrichtung 10 sicher an dem Oberfenster 7 gehalten. Es können Anschläge vorgesehen sein, um die Stellungen definiert zu sichern.

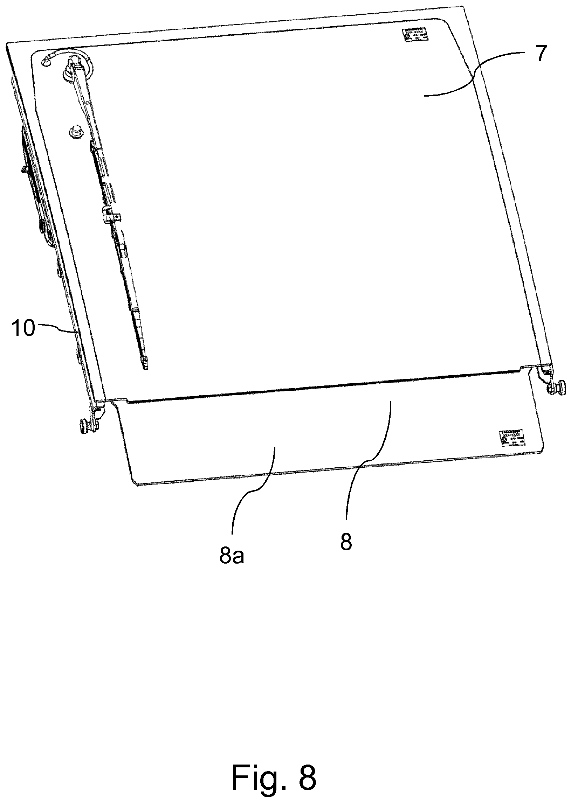

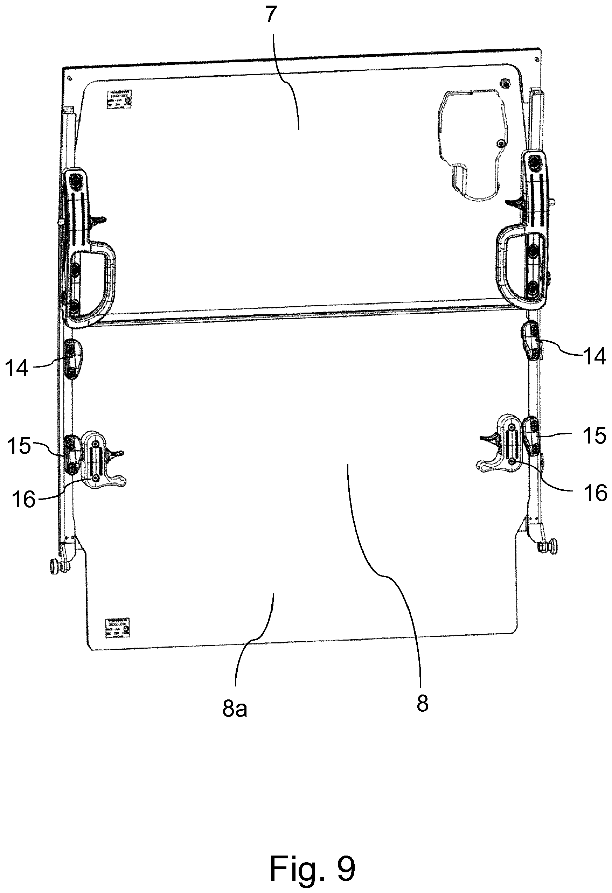

Die Figuren 8 und 9 zeigen die Anordnung von Oberfenster 7 und Unterfenster 8 in der in Figur 7 gezeigten Regendachstellung. Dabei zeigt Figur 8 die Außenansicht und Figur 9 die Rückansicht.

In Figur 8 ist gut erkennbar, dass das Unterfenster 8 um einen bestimmten Weg über das Oberfenster 7 hinausragt, wodurch der gewünschte in Figur 7 erkennbare Überstand 8a erreicht wird.

Dabei ist es von Vorteil, dass die Breite des Unterfensters 8 in dem überstehenden Bereich (Überstand 8a) geringer ist als die Breite des restlichen Teils des Unterfensters 8. So kann der restliche Teil zuverlässig in der Unterfenster-Führungseinrichtung 10 relativ zu dem Oberfenster 7 geführt werden, während der Überstand 8a keine Führung benötigt.

In Figur 9 ist in der Rückansicht eine zweite Arretierungseinrichtung 15 erkennbar, mit der die Regendachstellung gesichert werden kann, in der das Unterfenster 8 eine zweite Relativstellung relativ zu dem Oberfenster 7 einnimmt.

Die erste Arretierungseinrichtung 14 ist in diesem Fall wirkungslos. Die erste Arretierungseinrichtung 14 und die zweite Arretierungseinrichtung 15 können mithilfe von Rastelementen gebildet werden, die vom Fahrer bequem von seinem Sitzplatz aus von Innen bedient werden können. Zu diesem Zweck sind auf der Innenseite des Unterfensters 8 links und rechts zwei Riegelelemente 16 vorgesehen, die mit zu dem Arretierungseinrichtungen 14, 15 gehörenden Schließelementen in der jeweiligen Relativstellung gekoppelt werden können. Mithilfe der beiden Arretierungseinrichtungen 14, 15 ist es somit möglich, die Relativstellungen zwischen Unterfenster 8 und Oberfenster 7, insbesondere die Teilöffnungsstellung (Figur 3) und die Regendachstellung (Figur 8) zu sichern.

Bei einer nicht dargestellten Variante ist es auch möglich, das Oberfenster 7 gemeinsam mit dem Unterfenster 8 in die in Figur 7 gezeigte Regendachstellung zu bewegen.

## Patentansprüche

1. Fahrerkabine für ein Fahrzeug, mit
- einem Kabinenrahmen (1) mit einer nach vorne gerichteten Frontöffnung (2) und einem Dachbereich (3), und mit
- einem zweigeteilten Frontfenster mit einem Oberfenster (7) und einem Unterfenster (8),
wobei das Oberfenster (7) und das Unterfenster (8) in verschiedene Stellungen bewegbar sind, nämlich in
- eine Normalstellung, in der das Oberfenster (7) und das Unterfenster (8) die Frontöffnung (2) abdecken,
- eine Staustellung, in der das Oberfenster (7) und/oder das Unterfenster (8) im Dachbereich (3) angeordnet sind und die Frontöffnung (2) wenigstens teilweise, insbesondere vollständig geöffnet ist, und **gekennzeichnet durch**
- eine Regendachstellung, in der das Oberfenster (7) und/oder das Unterfenster (8) relativ zu der Staustellung im Wesentlichen horizontal um einen bestimmten Weg nach vorne verschoben ist.

2. Fahrerkabine nach Anspruch 1, wobei in der Regendachstellung das Oberfenster (7) und/oder das Unterfenster (8) über die Frontöffnung (2) nach vorne aus dem Kabinenrahmen (1) heraussteht und einen Überstand (8a) bildet.

3. Fahrerkabine nach Anspruch 1 oder 2, wobei
- der Überstand (8a) eine Längserstreckung von 10 bis 70 Prozent, insbesondere von 20 bis 40 Prozent der Länge des Oberfensters (7) oder des Unterfensters (8) aufweist, und wobei
- die Länge des Oberfensters (7) oder des Unterfensters (8) der vertikalen Erstreckung des jeweiligen Fensters entspricht, wenn das Fenster in der Normalstellung steht.

4. Fahrerkabine nach einem der vorstehenden Ansprüche, wobei der Bereich des Oberfensters (7) oder des Unterfensters (8), der den Überstand (8a) bildet, eine geringere Breite aufweist als der restliche Teil des betreffenden Fensters (7, 8).

5. Fahrerkabine nach einem der vorstehenden Ansprüche, wobei in der Regendachstellung das Oberfenster (7) in der Staustellung steht und das Unterfenster (8) relativ zu dem Oberfenster (7) im Wesentlichen horizontal um den bestimmten Weg nach vorne verschoben ist.

6. Fahrerkabine nach einem der vorstehenden Ansprüche, wobei eine Oberfenster-Führungseinrichtung (9) vorgesehen ist, zum Halten des Oberfensters (7) in seiner jeweiligen Stellung und zum Bewegen des Oberfensters (7) zwischen den jeweiligen Stellungen.

7. Fahrerkabine nach einem der vorstehenden Ansprüche, wobei die Oberfenster-Führungseinrichtung (9) wirkungsmäßig zwischen dem Oberfenster (7) und dem Kabinenrahmen (1) vorgesehen ist, derart, dass das Oberfenster (7) an dem Kabinenrahmen (1) gehalten ist.

8. Fahrerkabine nach einem der vorstehenden Ansprüche, wobei eine Unterfenster-Führungseinrichtung (10) vorgesehen ist, zum Halten des Unterfensters (8) in seiner jeweiligen Stellung und zum Bewegen des Unterfensters (8) zwischen den jeweiligen Stellungen.

9. Fahrerkabine nach einem der vorstehenden Ansprüche, wobei die Unterfenster-Führungseinrichtung (10) wirkungsmäßig zwischen dem Unterfenster (8) und dem Oberfenster (7) vorgesehen ist, derart, dass das Unterfenster (8) an dem Oberfenster (7) gehalten ist.

10. Fahrerkabine nach einem der vorstehenden Ansprüche, wobei die Unterfenster-Führungseinrichtung (10) von dem Oberfenster (7) lösbar ist, derart, dass das Unterfenster (8) in der Normalstellung stehen bleibt und das Oberfenster (7) aus der Normalstellung in eine andere Stellung bewegbar ist.

11. Fahrerkabine nach einem der vorstehenden Ansprüche, wobei eine erste Arretierungseinrichtung (14) vorgesehen ist, zum Halten des Unterfensters (8) relativ zu dem Oberfenster (7) in einer ersten Relativstellung, in der das Unterfenster (8) im Wesentlichen vollständig von dem Oberfenster (7) abgedeckt ist, bei einer Blickrichtung senkrecht auf das Oberfenster (7).

12. Fahrerkabine nach einem der vorstehenden Ansprüche, wobei eine zweite Arretierungseinrichtung (15) vorgesehen ist, zum Halten des Unterfensters (8) relativ zu dem Oberfenster (7) in einer zweiten Relativstellung, in der das Unterfenster (8) teilweise durch das Oberfenster (7) abgedeckt ist und dabei relativ zu dem Oberfenster (7) um einen Betrag vorsteht, der im Wesentlichen dem Überstand (8a) entspricht, bei einer Blickrichtung senkrecht auf das Oberfenster (7).

## Claims

1. Driver's cabin for a vehicle, having
- a cabin frame (1) with a forwardly directed front opening (2) and a roof region (3), and having
- a two-part front window with an upper window (7) and a lower window (8), wherein the upper window (7) and the lower window (8) can move into different positions, specifically into
- a normal position in which the upper window (7) and the lower window (8) cover the front opening (2),
- a stowed position in which the upper window (7) and/or the lower window (8) are disposed in the roof region (3) and the front opening (2) is at least partially, in particular fully, opened, and **characterised by**
- a rain cover position in which the upper window (7) and/or the lower window (8) is pushed forwards relative to the stowed position substantially horizontally by a specific distance.

2. Driver's cabin as claimed in claim 1, wherein in the rain cover position, the upper window (7) and/or the lower window (8) protrudes over the front opening (2) forwards out of the cabin frame (1) and forms a projection (8a).

3. Driver's cabin as claimed in claim 1 or 2, wherein
- the projection (8a) has a longitudinal extension of 10 to 70 percent, in particular 20 to 40 percent of the length of the upper window (7) or of the lower window (8), and wherein
- the length of the upper window (7) or of the lower window (8) corresponds to the vertical extension of the respective window when the window is in the normal position.

4. Driver's cabin as claimed in any one of the preceding claims, wherein the region of the upper window (7) or of the lower window (8) which forms the projection (8a) has a narrower width than the remaining part of the relevant window (7, 8).

5. Driver's cabin as claimed in any one of the preceding claims, wherein, in the rain cover position, the upper window (7) is in the stowed position and the lower window (8) is pushed forwards relative to the upper window (7) substantially horizontally by the specific distance.

6. Driver's cabin as claimed in any one of the preceding claims, wherein an upper window guiding device (9) is provided for holding the upper window (7) in its respective position and for moving the upper window (7) between the respective positions.

7. Driver's cabin as claimed in any one of the preceding claims, wherein the upper window guiding device (9) is operatively provided between the upper window (7) and the cabin frame (1) in such a way that the upper window (7) is held on the cabin frame (1).

8. Driver's cabin as claimed in any one of the preceding claims, wherein a lower window guiding device (10) is provided for holding the lower window (8) in its respective position and for moving the lower window (8) between the respective positions.

9. Driver's cabin as claimed in any one of the preceding claims, wherein the lower window guiding device (10) is operatively provided between the lower window (8) and the upper window (7) in such a way that the lower window (8) is held on the upper window (7).

10. Driver's cabin as claimed in any one of the preceding claims, wherein the lower window guiding device (10) can be released from the upper window (7) in such a way that the lower window (8) remains in the normal position and the upper window (7) can be moved out of the normal position into another position.

11. Driver's cabin as claimed in any one of the preceding claims, wherein a first locking device (14) is provided for holding the lower window (8) in a first relative position relative to the upper window (7), in which the lower window (8) is substantially completely covered by the upper window (7), with a viewing direction perpendicular to the upper window (7).

12. Driver's cabin as claimed in any one of the preceding claims, wherein a second locking device (15) is provided for holding the lower window (8) in a second relative position relative to the upper window (7), in which the lower window (8) is partially covered by the upper window (7) and thus protrudes relative to the upper window (7) by an amount which substantially corresponds to the projection (8a), with a viewing direction perpendicular to the upper window (7).

## Revendications

1. Cabine de conducteur pour un véhicule avec
- un châssis de cabine (1) avec une ouverture frontale (2) orientée vers l'avant et une partie de toit (3) et avec
- une fenêtre frontale en deux parties avec une fenêtre supérieure (7) et une fenêtre inférieure (8)
la fenêtre supérieure (7) et la fenêtre inférieure (8) étant mobiles vers différentes positions, à savoir
- une position normale, dans laquelle la fenêtre supérieure (7) et la fenêtre inférieure (8) recouvrent l'ouverture frontale (2),
- une position de rangement, dans laquelle la fenêtre supérieure (7) et/ou la fenêtre inférieure (8) sont disposées dans la partie de toit (3) et l'ouverture frontale (2) est ouverte au moins partiellement, plus particulièrement et **caractérisé par**
- une position de protection contre la pluie, dans laquelle la fenêtre supérieure (7) et/ou la fenêtre inférieure (8) est poussée vers l'avant d'une distance déterminée de manière globalement horizontale par rapport à la position de rangement.

2. Cabine de conducteur selon la revendication 1, dans laquelle, dans la position de protection contre la pluie, la fenêtre supérieure (7) et/ou la fenêtre inférieure (8) dépasse de l'ouverture frontale (2) vers l'avant hors du châssis de la cabine (1) et forme un surplomb (8a).

3. Cabine de conducteur selon la revendication 1 ou 2, dans laquelle
- le surplomb (8a) présente une extension longitudinale de 10 à 70 %, plus particulièrement de 20 à 40 % de la longueur de la fenêtre supérieure (7) ou de la fenêtre inférieure (8) et dans laquelle
- les longueurs de la fenêtre supérieure (7) ou de la fenêtre inférieure (8) correspondent à l'extension verticale de la fenêtre respective lorsque la fenêtre est en position normale.

4. Cabine de conducteur selon l'une des revendications précédentes, dans laquelle la partie de la fenêtre supérieure (7) ou de la fenêtre inférieure (8), qui forme le surplomb (8a), présente une largeur plus faible que le reste de la fenêtre (7, 8) concernée.

5. Cabine de conducteur selon l'une des revendications précédentes, dans laquelle, dans la position de protection contre la pluie, la fenêtre supérieure (7) se trouve dans la position de rangement et la fenêtre inférieure (8) est poussée vers l'avant de la distance déterminée de manière globalement horizontale par rapport à la fenêtre supérieure (7).

6. Cabine de conducteur selon l'une des revendications précédentes, dans laquelle un dispositif de guidage de fenêtre supérieure (9) est prévu pour le maintien de la fenêtre supérieure (7) dans sa position respective et pour le déplacement de la fenêtre supérieure (7) entre les positions respectives.

7. Cabine de conducteur selon l'une des revendications précédentes, dans laquelle le dispositif de guidage de fenêtre supérieure (9) est disposé de manière fonctionnelle entre la fenêtre supérieure (7) et le châssis de cabine (1), de façon à ce que la fenêtre supérieure (7) soit maintenue sur le châssis de cabine (1).

8. Cabine de conducteur selon l'une des revendications précédentes, dans laquelle un dispositif de guidage de fenêtre inférieure (10) est prévu pour le maintien de la fenêtre inférieure (8) dans sa position respective et pour le déplacement de la fenêtre inférieure (8) entre les positions respectives.

9. Cabine de conducteur selon l'une des revendications précédentes, dans laquelle le dispositif de guidage de fenêtre inférieure (10) est disposé de manière fonctionnelle entre la fenêtre inférieure (8) et la fenêtre supérieure (7), de façon à ce que la fenêtre inférieure (8) soit maintenue sur la fenêtre supérieure (7).

10. Cabine de conducteur selon l'une des revendications précédentes, dans laquelle le dispositif de guidage de fenêtre inférieure (10) peut être détaché de la fenêtre supérieure (7), de façon à ce que la fenêtre inférieure (8) reste dans la position normale et la fenêtre supérieure (7) peut être déplacée de la position normale vers une autre position.

11. Cabine de conducteur selon l'une des revendications précédentes, dans laquelle un premier dispositif d'arrêt (14) est prévu pour le maintien de la fenêtre inférieure (8) par rapport à la fenêtre supérieure (7) dans une première position relative, dans laquelle la fenêtre inférieure (8) est recouverte globalement entièrement par la fenêtre supérieure (7), dans un champ de vision perpendiculaire à la fenêtre supérieure (7).

12. Cabine de conducteur selon l'une des revendications précédentes, dans laquelle un deuxième dispositif d'arrêt (15) est prévu pour le maintien de la fenêtre inférieure (8) par rapport à la fenêtre supérieure (7) dans une deuxième position relative, dans laquelle la fenêtre inférieure (8) est recouverte partiellement par la fenêtre supérieure (7) et dépasse de la fenêtre supérieure (7) d'une distance qui correspond globalement a surplomb (8a), dans un champ de vision perpendiculaire à la fenêtre supérieure (7).
